# EUROPEAN PATENT APPLICATION

(11) **EP 4 550 758 A1**
(43) Date of publication of application: **07.05.2025**
(21) Application number: 23829751.9
(22) Date of filing: 12.05.2023
(51) Int. Cl.: H04L 67/55, G06Q 30/0207, H04W 8/18, H04W 8/22

(54) **INFORMATION PUSHING METHOD AND DEVICE FOR DORMANT CARD, AND STORAGE MEDIUM**

(30) Priority: 29.06.2022 CN 202210753202
(71) Applicant: ZTE CORPORATION, Shenzhen, Guangdong 518057 (CN)
(72) Inventor: SUN, Bingbin, Shenzhen, Guangdong 518057 (CN)
(74) Representative: Brunazzi, Stefano
(86) International application number: PCT/CN2023/093978
(87) International publication number: WO 2024/001565

(57) **Abstract**

Provided are an information push method and device for a dormant card, and a storage medium. The method includes: acquiring a startup time of the dormant card and a shutdown time which is closest to the startup time in the case of detecting a startup flag of a terminal with the dormant card; calculating a difference between the startup time and the shutdown time as a dormant duration; and pushing corresponding discount information to the terminal with the dormant card in the case of the dormant duration reaching a preset time threshold.

## Description

### Cross-Reference to Related Application

The present disclosure claims priority to Chinese Patent Application No. CN202210753202.8, entitled "INFORMATION PUSH METHOD AND DEVICE FOR DORMANT CARD, AND STORAGE MEDIUM", and filed on June 29, 2022, which is incorporated herein by reference in its entirety.

### Technical Field

The present disclosure relates to the field of core network technology, and in particular, to an information push method and device for a dormant card, and a storage medium.

### Background

With the development of the mobile market, users have more and more choices when selecting operators, and some individuals even possess numbers from multiple operators and tend to choose the SIM card plan that offers the best value from the various operators. Therefore, it is particularly important for the operators to win over this segment of customers. The operators need to know the usage status of SIM cards of the users in time. Especially for users whose devices have been turned off for an extended period, more favorable packages should be offered to retain them. Currently, there is no related mechanism providing a solution to detect dormant cards, resulting in the dormant card users being unable to access cost-effective SIM card plans, which leads to poor user experience. Therefore, how to avoid poor user experience caused by the inability to obtain discounts when reactivating dormant cards in the related art has become a problem that urgently needs to be solved.

### Summary

Embodiments of the present disclosure provide an information push method and device for a dormant card, and a storage medium.

In a first aspect, an embodiment of the present disclosure provides an information push method for a dormant card, including: acquiring a startup time of the dormant card and a shutdown time which is closest to the startup time in the case of detecting a startup flag of a terminal with the dormant card; calculating a difference between the startup time and the shutdown time as a dormant duration; and pushing corresponding discount information to the terminal with the dormant card in the case of the dormant duration reaching a preset time threshold.

In a second aspect, an embodiment of the present disclosure further provides an information push device for a dormant card, including a processor, a memory, a computer program stored on the memory and executable by the processor, and a data bus used to implement a connection communication between the processor and the memory, where the computer program, when executed by the processor, implements the information push method for a dormant card provided in the specification of the present disclosure.

In a third aspect, an embodiment of the present disclosure further provides a storage medium for computer-readable storage. The storage medium stores one or more programs. The one or more programs may be executed by one or more processors to implement the information push method for a dormant card provided in the specification of the present disclosure.

### Brief Description of the Drawings

In order to describe the technical solutions of the embodiments of the present disclosure more clearly, the accompanying drawings required for describing the embodiments will be briefly introduced below. Apparently, the accompanying drawings in the following description are some embodiments of the present disclosure, and those of ordinary skill in the art may also obtain other accompanying drawings according to these accompanying drawings without creative efforts.
Fig. 1 is a schematic flowchart of an information push method for a dormant card according to an embodiment of the present disclosure;
Fig. 2 is a schematic flowchart of sub-steps of the information push method for a dormant card in Fig. 1;
Fig. 3 is a schematic flowchart of a CS domain triggering an automatic notification process when a 2G or 3G dormant card user turns on a device in the implementation of an information push method for a dormant card according to an embodiment;
Fig. 4 is a schematic flowchart of a PS domain triggering an automatic notification process when a 2G or 3G dormant card user turns on a device in the implementation of an information push method for a dormant card according to an embodiment;
Fig. 5 is a schematic flowchart of triggering an automatic notification process when a 4G dormant card user turns on a device in the implementation of an information push method for a dormant card according to an embodiment;
Fig. 6 is a schematic flowchart of triggering an automatic notification process when a 5G dormant card user turns on a device in the implementation of an information push method for a dormant card according to an embodiment; and
Fig. 7 is a schematic block diagram of a structure of an information push device for a dormant card according to an embodiment of the present disclosure.

### Detailed Description of the Embodiments

The technical solutions in the embodiments of the present disclosure will be clearly and completely described below with reference to the accompanying drawings in the embodiments of the present disclosure, and it is apparent that the described embodiments are merely a part rather than all of embodiments of the present disclosure. Based on the embodiments of the present disclosure, all other embodiments obtained by those of ordinary skill in art without creative work shall fall within the scope of protection of the present disclosure.

The flowcharts shown in the accompanying drawings are merely exemplary illustrations, which do not necessarily include all contents and operations/steps, or do not need to be performed in the described order. For example, some operation/steps may also be disassembled, combined, or partially combined, and therefore a practical execution order may be changed according to practical situations.

It should be understood that the terms used in the specification of the present disclosure are merely for the purpose of describing the specific embodiments and are not intended to limit the present disclosure. As used in the specification of the present disclosure and the appended claims, unless the context clearly indicates otherwise, the singular forms "a", "an", and "the" are intended to include the plural forms.

Embodiments of the present disclosure provide an information push method for a dormant card, an information push device for a dormant card, and a storage medium. The information push method for a dormant card may be applied to a mobile terminal, which may be an electronic device such as a mobile phone, a tablet, a notebook computer, a desktop computer, a personal digital assistant, and a wearable device.

Some embodiments of the present disclosure are described in detail with reference to the accompanying drawings. The following embodiments and features in the embodiments may be combined without conflicts.

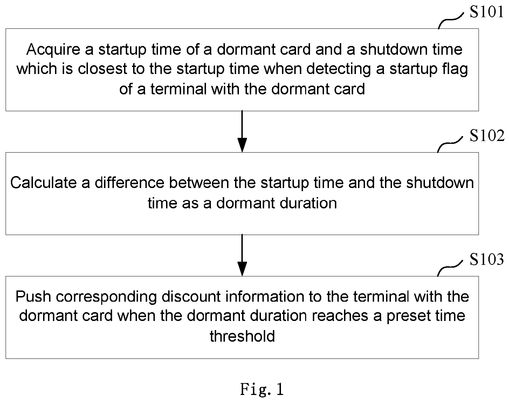

The following is a detailed introduction of an information push method for a dormant card provided in this embodiment of the present disclosure, with reference to a scenario in Fig. 1. It should be noted that the scenario in Fig. 1 is only used to explain the information push method for a dormant card provided in this embodiment of the present disclosure, but does not limit the application scenario of the information push method for a dormant card provided in this embodiment of the present disclosure.

Referring to Fig. 1, Fig. 1 is a schematic flowchart of an information push method for a dormant card according to an embodiment of the present disclosure.

As shown in Fig. 1, the information push method for a dormant card includes step S101 to step S103.

At Step S101: Acquire a startup time of the dormant card and a shutdown time which is closest to the startup time when detecting a startup flag of a terminal with the dormant card.

At Step S102: Calculate a difference between the startup time and the shutdown time as a dormant duration.

At Step S103: Push corresponding discount information to the terminal with the dormant card when the dormant duration reaches a preset time threshold.

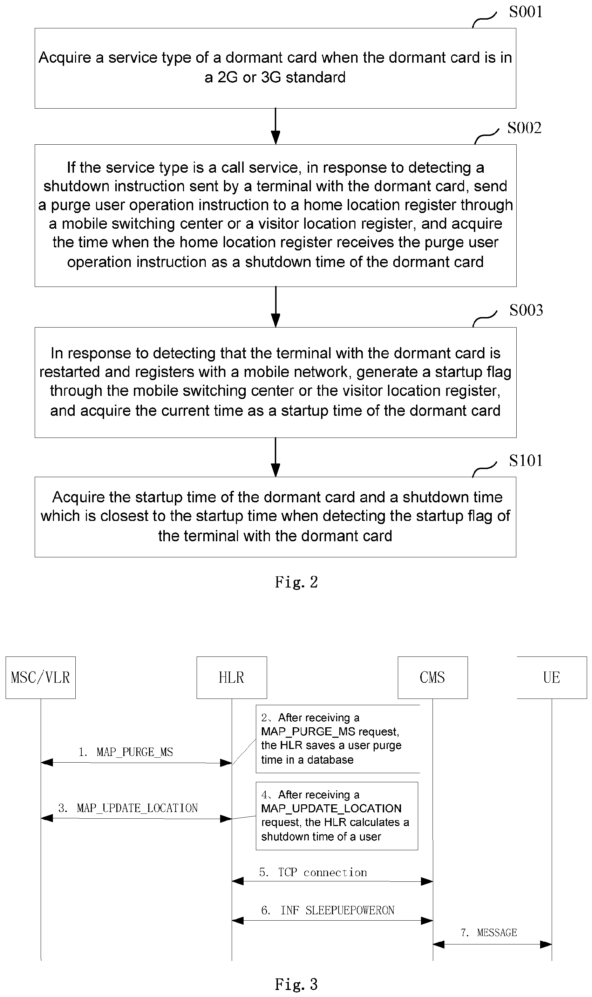

Referring to Fig. 2, Fig. 2 is a schematic diagram of a scenario of an information push method for a dormant card according to an embodiment of the present disclosure. As shown in Fig. 2, before step S101, the method further includes step S001 to step S003.

At Step S001: Acquire a service type of the dormant card when the dormant card is in a 2G or 3G standard.

At Step S002: If the service type is a call service, in the case of detecting a shutdown instruction sent by the terminal with the dormant card, send a purge user operation instruction to a home location register through a mobile switching center or a visitor location register, and acquire the time when the home location register receives the purge user operation instruction as a shutdown time of the dormant card.

At Step S003: In the case of detecting that the terminal with the dormant card is restarted and registers with a mobile network, generate a startup flag through the mobile switching center or the visitor location register, and acquire the current time as the startup time of the dormant card.

In this embodiment, when a 2G or 3G dormant card user turns on the device, a circuit switched (CS) domain triggers an automatic notification process as shown in Fig. 3, with the following steps A to G.
A. After the user turns off the device and exceeds a certain period, the mobile switching center (MSC)/ the visitor location register (VLR) triggers a MAP_PURGE_MS (purge user operation) request to the HLR.
B. After receiving the MAP_PURGE_MS request, the home location register (HLR) saves a user purge time in a database.
C. After the user turns on the device again and registers with the MSC/VLR, the MSC triggers a MAP_UPDATE_LOCATION to the HLR for CS registration upon startup.
D. After receiving the MAP_UPDATE_LOCATION request (a location update instruction and a registration instruction), the HLR calculates the dormant duration for the user by subtracting the purge time from the current time according to the purge time previously saved by the user, and if the dormant duration exceeds the dormant duration configured by a network administrator, the automatic notification process is triggered.
E. The HLR establishes a transmission control protocol (TCP) connection based on an IP address of a CMS platform configured by the network administrator.
F. The HLR sends an INF SLEEPUEPOWERON (activate a dormant user device) message to the CMS platform through the TCP, where the format of the message is as shown in Table 1.
G. Based on "User Dormant Duration In Days" in the message, the content management system (CMS) platform sends different discount activity messages to the user according to the number of days.

**Table 1: SOAP Message Format for Dormant Card Notification**

| Parameter Name | Description of Parameter Values | | | |
|---|---|---|---|---|
| Input Parameters for RTDM Flow | Parameter Name | Configuration Requirements | Parameter Type | Parameter Description |
| | Identity | M | - | Source Identity Name |
| | ClientTimeZon elD | M | - | Client Time Zone ID |
| | Record_ID | M | Int | Unique Identifier for Each Request in the RTDM Flow |
| | MSISDN | M | String | Mobile Number |
| | IMSI | M | String | International Mobile Subscriber Identification Code |
| | Location | M | String | Subscriber Register Location Information |
| | PurgeDuration | M | Int | User Dormant Duration In Days |
| SampleHT TP Request | Examples: | | | |
| | POST /RTDM/Event HTTP/1.1 | | | |
| | Host: 10.55.65.180:9085 | | | |
| | Content-Type: text/xml | | | |
| | SOAPAction:"OTA#SleepUEPowerOnNotify" | | | |
| | Content-Length: 872 | | | |
| Sample SOAP Request | Examples: | | | |
| | <?xml version="1.0" encoding="UTF-8"?> | | | |
| | <SOAP-ENV:Envelope | | | |
| | xmlns:SOAP-ENV="http://schemas.xmlsoap.org/soap/envelope/" | | | |
| | xmlns:ns1="http://zte.com.cn/ota/"> | | | |
| | <SOAP-ENV:Header> | | | |
| | <ns1:Identity>VLR</ns1:Identity> | | | |
| | <ns1:ClientTimeZoneID>Asia/Shanghai</ns1:ClientTimeZoneID> | | | |
| | </SOAP-ENV:Header> | | | |
| | <SOAP-ENV:Body> | | | |
| | <ns1:SubscriberClass Name="PowerOnNotify"> | | | |
| | <Method Name="SetMOAttributes"> | | | |
| | <Record_ID>1048665</Record_ID> | | | |
| | <IMSI>460000000000307</IMSI> | | | |
| | <MSISDN>8613813990307</MSISDN> | | | |
| | <VLRNumber>8613982</VLRNumber> | | | |
| | <PurgeDuration>10</PurgeDuration> | | | |
| | </Method> | | | |
| | </ns1:SubscriberClass> | | | |
| | </SOAP-ENV: Body> | | | |
| | </SOAP-ENV: Envelope> | | | |
| Sample Response | Examples: | | | |
| | <?xml version="1.0" encoding="UTF-8"?> | | | |
| | <SOAP-ENV:Envelope | | | |
| | xmlns:SOAP-ENV=''http://schemas.xmlsoap.org/soap/envelope/" | | | |
| | xmlns:ns1="http://zte.com.cn/ota/"> | | | |
| | <SOAP-ENV:Body> | | | |
| | <ns1:ResponseClass> | | | |
| | <ResponseSubClass> | | | |
| | <ResultCode>0</ResultCode> | | | |
| | <ResultDescr>Success</ResultDescr> | | | |
| | </ResponseSubClass> | | | |
| | </ns1:ResponseClass> | | | |
| | </SOAP-ENV:Body> | | | |
| | </SOAP-ENV:Envelope> | | | |

This embodiment of the present disclosure provides the information push method for a dormant card, including: acquiring the startup time of the dormant card and a shutdown time which is closest to the startup time when detecting the startup flag of the terminal with the dormant card; calculating the difference between the startup time and the shutdown time as the dormant duration; and pushing the corresponding discount information to the terminal with the dormant card when the dormant duration reaches the preset time threshold. Through the above method, after the startup of the terminal with the dormant card is detected, the user experience is improved by acquiring the dormant duration of the terminal and automatically sending the corresponding discount information to the terminal based on the dormant duration. Therefore, the technical problem about the poor user experience caused by the inability to obtain discounts when reactivating the dormant card is solved.

As shown in Fig. 1, before step S101, the information push method for a dormant card further includes: if the service type is a data service, in the case of detecting a shutdown instruction sent by the terminal with the dormant card, sending the purge user operation instruction to the home location register through a wireless packet service support node, and acquiring the time when the home location register receives the purge user operation instruction as the shutdown time of the dormant card; and in the case of detecting that the terminal with the dormant card is restarted and registers with the GPRS network, generating a startup flag through the wireless packet service support node, and acquiring the current time as the startup time of the dormant card.

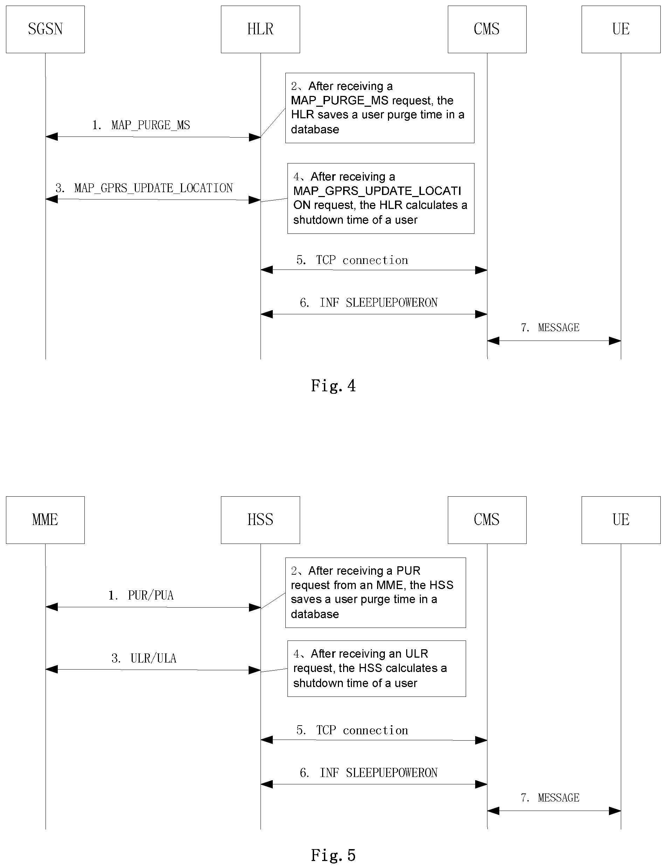

In this embodiment, when the 2G or 3G dormant card user turns on the device, a packet switched (PS) domain triggers the automatic notification process as shown in Fig. 4, with the following steps A to G.
A. After the user turns off the device and exceeds a certain period, a serving GPRS support node (SGSN) triggers a MAP_PURGE_MS request to the HLR.
B. After receiving the MAP_PURGE_MS request, the HLR saves a user purge time in the database.
C. After the user turns on the device again and registers with the SGSN, the SGSN triggers a MAP_GPRS_UPDATE_LOCATION to the HLR for PS registration upon startup.
D. After receiving the MAP_GPRS_UPDATE_LOCATION request, the HLR calculates the dormant duration for the user by subtracting the purge time from the current time according to the purge time previously saved by the user, and if the dormant duration exceeds the dormant duration configured by the network administrator, the automatic notification process is triggered.
E. The HLR establishes a TCP connection based on an IP address of a CMS platform configured by the network administrator.
F. The HLR sends an INF SLEEPUEPOWERON message to the CMS platform through the TCP, with the message format referring to Table 1.
G. Based on "User Dormant Duration In Days" in the message, the CMS platform sends different discount activity messages to the user according to the number of days.

This embodiment of the present disclosure provides the information push method for a dormant card, including: acquiring the startup time of the dormant card and a shutdown time which is closest to the startup time when detecting the startup flag of the terminal with the dormant card; calculating the difference between the startup time and the shutdown time as the dormant duration; and pushing the corresponding discount information to the terminal with the dormant card when the dormant duration reaches the preset time threshold. Through the above method, after the startup of the terminal with the dormant card is detected, the user experience is improved by acquiring the dormant duration of the terminal and automatically sending the corresponding discount information to the terminal based on the dormant duration. Therefore, the technical problem about the poor user experience caused by the inability to obtain discounts when reactivating the dormant card is solved.

As shown in Fig. 1, before step S101, the information push method for a dormant card further includes: if the standard of the dormant card is 4G, in the case of detecting a shutdown instruction sent by the terminal with the dormant card, sending a 4G user location information purge request to a home subscriber server through a mobility management entity, and acquiring the time when the home subscriber server receives the request as the shutdown time of the dormant card; and in the case of detecting that the terminal with the dormant card is restarted and registers with the 4G network, generating a startup flag through the mobility management entity and acquiring the current time as the startup time of the dormant card.

In this embodiment, when the 4G dormant card user turns on the device, the automatic notification process is triggered, as shown in Fig. 5, with the following steps A to G.
A. After the 4G user turns off the device and exceeds a certain period, the mobility management entity (MME) triggers a PUR request to the home subscriber server (HSS).
B. After receiving the PUR request, the HSS returns a PUA response and saves a user purge time in the database.
C. After the user turns on the device again and registers with the MME, the MME triggers an update location request (ULR) to the HSS for EPS registration upon startup.
D. After receiving the ULR request, the HSS returns an update location answer (ULA) and calculates the dormant duration for the user by subtracting the purge time from the current time according to the purge time previously saved by the user, and if the dormant duration exceeds the dormant duration configured by the network administrator, the automatic notification process is triggered.
E. The HSS establishes a TCP connection based on an IP address of a CMS platform configured by the network administrator.
F. The HSS sends an INF SLEEPUEPOWERON message to the CMS platform through the TCP, with the message format referring to Table 1.
G. Based on "User Dormant Duration In Days" in the message, the CMS platform sends different discount activity messages to the user according to the number of days.

This embodiment of the present disclosure provides the information push method for a dormant card, including: acquiring the startup time of the dormant card and a shutdown time which is closest to the startup time when detecting the startup flag of the terminal with the dormant card; calculating the difference between the startup time and the shutdown time as the dormant duration; and pushing the corresponding discount information to the terminal with the dormant card when the dormant duration reaches the preset time threshold. Through the above method, after the startup of the terminal with the dormant card is detected, the user experience is improved by acquiring the dormant duration of the terminal and automatically sending the corresponding discount information to the terminal based on the dormant duration. Therefore, the technical problem about the poor user experience caused by the inability to obtain discounts when reactivating the dormant card is solved.

As shown in Fig. 1, before step S101, the information push method for a dormant card further includes: when the standard of the dormant card is 5G, in the case of detecting a shutdown instruction sent by the terminal with the dormant card, sending a flag purge instruction to a unified data management platform through an authentication management platform, and acquiring the time when the unified data management platform receives the flag purge instruction as the shutdown time of the dormant card; and in the case of detecting that the terminal with the dormant card is restarted and registers with the 5G network, generating a startup flag through the authentication management platform and acquiring the current time as the startup time of the dormant card.

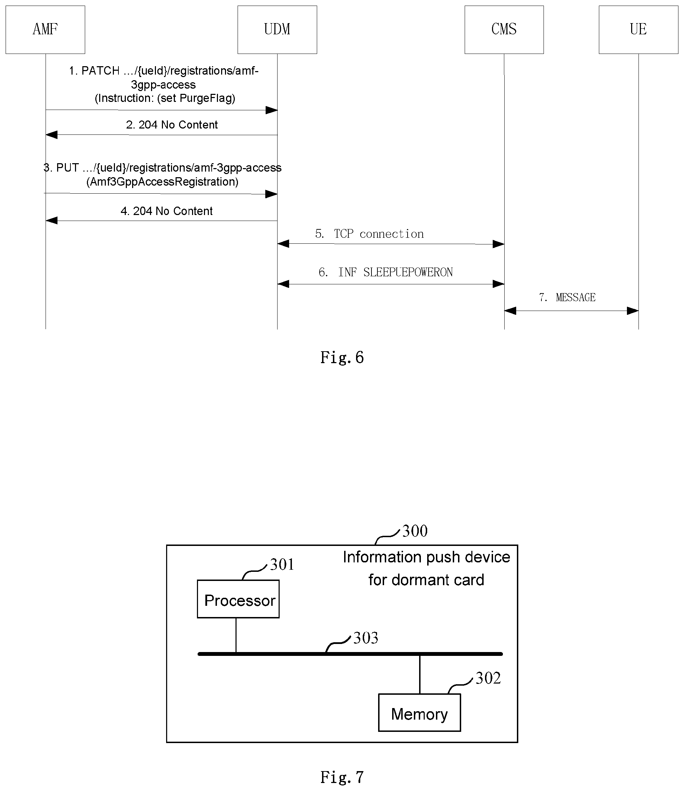

In this embodiment, when the 5G dormant card user turns on the device, the automatic notification process is triggered, as shown in Fig. 6, with the following steps A to G.
A. When the 5G user turns off the device, an authentication management function (AMF) triggers a PATCH request carrying a purge flag to UDM.
B. After receiving the PATCH request, the UDM returns a 204 response and saves a user purge time in the database.
C. After the user turns on the device again and registers with the AMF, the AMF triggers a PUT to the UDM for 5G registration upon startup.
D. After receiving the PUT request, the UDM returns the 204, and calculates the dormant duration for the user by subtracting the purge time from the current time according to the purge time previously saved by the user, and if the dormant duration exceeds the dormant duration configured by the network administrator, the automatic notification process is triggered.
E. The UDM establishes a TCP connection based on an IP address of a CMS platform configured by the network administrator.
F. The UDM sends an INF SLEEPUEPOWERON message to the CMS platform through the TCP, with the message format referring to Table 1.
G. Based on "User Dormant Duration In Days" in the message, the CMS platform sends different discount activity messages to the user according to the number of days.

The information push method for a dormant card provided in the above embodiment includes: acquiring the startup time of the dormant card and a shutdown time which is closest to the startup time when detecting the startup flag of the terminal with the dormant card; calculating the difference between the startup time and the shutdown time as the dormant duration; and pushing the corresponding discount information to the terminal with the dormant card when the dormant duration reaches the preset time threshold. Through the above method, after the startup of the terminal with the dormant card is detected, the user experience is improved by acquiring the dormant duration of the terminal and automatically sending the corresponding discount information to the terminal based on the dormant duration. Therefore, the technical problem about the poor user experience caused by the inability to obtain discounts when reactivating the dormant card is solved.

Before step S103, the embodiment shown in Fig. 1 further includes: acquiring an Internet protocol address of the content management system and establishing a connection with the content management system based on the Internet protocol address, where the connection is a connection based on the transmission control protocol (TCP).

As shown in Fig. 1, step S103 includes: sending, in the case of the dormant duration reaching the preset time threshold, the dormant duration to the content management system for the content management system to find discount information corresponding to the dormant duration; and receiving the discount information sent by the content management system as target discount information, and pushing the target discount information to the terminal with the dormant card.

In this embodiment, when the dormant duration reaches a first time threshold and is less than a second time threshold, first discount information corresponding to the first time threshold is determined as the target discount information; and when the dormant duration reaches the second time threshold and is less than a third time threshold, second discount information corresponding to the second time threshold is determined as the target discount information, where the discount level of the second discount information is greater than that of the first discount information.

The information push method for a dormant card provided in the above embodiment includes: acquiring the startup time of the dormant card and a shutdown time which is closest to the startup time when detecting the startup flag of the terminal with the dormant card; calculating the difference between the startup time and the shutdown time as the dormant duration; and pushing the corresponding discount information to the terminal with the dormant card when the dormant duration reaches the preset time threshold. Through the above method, after the startup of the terminal with the dormant card is detected, the user experience is improved by acquiring the dormant duration of the terminal and automatically sending the corresponding discount information to the terminal based on the dormant duration. Therefore, the technical problem about the poor user experience caused by the inability to obtain discounts when reactivating the dormant card is solved.

Referring to Fig. 7, Fig. 7 is a schematic block diagram of a structure of an information push device for a dormant card according to an embodiment of the present disclosure.

As shown in Fig. 7, the information push device 300 for a dormant card includes a processor 301 and a memory 302. The processor 301 and the memory 302 are connected through a bus 303, such as an inter-integrated circuit (I2C) bus.

The processor 301 is configured to provide computing and control capabilities, supporting the operation of the entire information push device for a dormant card. The processor 301 may be a central processing unit (CPU), or may also be other general-purpose processors, a digital signal processor (DSP), an application specific integrated circuit (ASIC), a field-programmable gate array (FPGA) or other programmable logic devices, discrete gate or transistor logic devices, discrete hardware components, etc. The general-purpose processor may be a microprocessor, any conventional processor, or the like.

The memory 302 may be a flash chip, a read-only memory (ROM), a magnetic disk, an optical disk, a U disk, a mobile hard drive, or the like.

Those skilled in the art should understand that the structure shown in Fig. 5 is merely a block diagram of a partial structure relevant to the solutions of the embodiments of the present disclosure, and does not constitute a limitation on the information push device for a dormant card to which the solutions of the embodiments of the present disclosure are applied. The information push device for a dormant card may include more or fewer components than those shown in the figure, or combine certain components, or have different arrangements of components.

The processor 301 is configured to run a computer program stored in the memory 302 and implement any one of the information push methods for a dormant card provided in the embodiments of the present disclosure when executing the computer program.

In some embodiments, the processor 301 is configured to run the computer program stored in the memory, and implement the following steps when executing the computer program: acquiring a startup time of the dormant card and a shutdown time which is closest to the startup time when detecting a startup flag of a terminal with the dormant card; calculating a difference between the startup time and the shutdown time as a dormant duration; and pushing corresponding discount information to the terminal with the dormant card when the dormant duration reaches a preset time threshold.

It should be noted that those skilled in the art can clearly understand that, for the convenience and brevity of description, the specific working process of the aforementioned information push device for a dormant card may be known with reference to the corresponding process in the embodiment of the above information push method for a dormant card, which is not repeated herein.

An embodiment of the present disclosure further provides a storage medium for computer-readable storage. The storage medium stores one or more programs. The one or more programs may be executed by one or more processors to implement any one of the information push methods for a dormant card provided in the specification of the embodiments of the present disclosure.

The storage medium may be an internal storage unit of the above information push device for a dormant card in the above embodiment, such as a hard drive or an internal memory of the information push device for a dormant card. The storage medium may also be an external storage device of the information push device for a dormant card, such as a plug-in hard drive, a smart media card (SMC), a secure digital (SD) card, and a flash card, that is arranged on the information push device for a dormant card.

Those of ordinary skill in the art should understand that all or some of the steps in the method disclosed above, as well as functional modules/units in the system and the device, may be implemented as software, firmware, hardware, or a suitable combination thereof. In hardware embodiments, the division between the functional modules/units mentioned in the above description does not necessarily correspond to the division of physical components. For example, a single physical component may have a plurality of functions, or a single function or step may be performed collaboratively by several physical components. Some or all of the physical components may be implemented as software executed by a processor, such as a central processing unit, a digital signal processor, or a microprocessor, or may be implemented as hardware, or may be implemented as an integrated circuit, such as an application specific integrated circuit. The software may be distributed on a computer-readable medium, which may include a computer storage medium (or a non-transitory medium) and a communication medium (or a transitory medium).As is well known to those of ordinary skill in the art, the term "computer storage medium" includes volatile and non-volatile, removable and non-removable media implemented in any method or technology for storing information (e.g., a computer-readable instruction, a data structure, a program module, or other data).The computer storage medium includes, but is not limited to, a RAM, a ROM, an EEPROM, a flash memory, or other memory technologies, a CD-ROM, a digital versatile disk (DVD), or other optical disk storage, a magnetic cassette, a magnetic tape, a magnetic disk storage, or other magnetic storage apparatuses, or any other medium that can be configured to store desired information and that can be accessed by a computer. Further, as is commonly known to those of ordinary skill in the art, the communication medium typically includes a computer-readable instruction, a data structure, a program module, or other data in modulated data signals, such as carrier waves or other transmission mechanisms, and may include any information delivery medium.

The embodiments of the present disclosure provide the information push method and device for a dormant card, and the storage medium. The method includes: acquiring the startup time of the dormant card and a shutdown time which is closest to the startup time when detecting the startup flag of the terminal with the dormant card; calculating the difference between the startup time and the shutdown time as the dormant duration; and pushing the corresponding discount information to the terminal with the dormant card when the dormant duration reaches the preset time threshold. Through the above method, after the startup of the terminal with the dormant card is detected, the user experience is improved by acquiring the dormant duration of the terminal and automatically sending the corresponding discount information to the terminal based on the dormant duration. Therefore, the technical problem about the poor user experience caused by the inability to obtain discounts when reactivating the dormant card is solved.

It should be understood that the term "and/or" used in the specification and the appended claims of the present disclosure refers to any combination and all possible combinations of one or more associated listed items, and includes these combinations. It should be noted that herein, the terms "comprise", "include" or any other variations thereof are intended to encompass non-exclusive inclusion, such that a process, a method, an article, or a system that includes a series of elements not only includes those elements but also includes other elements not explicitly listed or elements inherent to the process, the method, the article, or the system. In the absence of further limitations, an element limited by the phrase "including one..." does not exclude the presence of additional identical elements in the process, the method, the article, or the system that includes the element.

The serial numbers of the above embodiments of the present disclosure are for descriptive purposes only and do not represent the superiority or inferiority of the embodiments. The above contents are merely specific embodiments of the present disclosure, but the scope of protection of the present disclosure is not limited to this; and any technical personnel familiar with the technical field may easily conceive of various equivalent modifications or substitutions within the technical scope disclosed by the present disclosure, and these modifications or substitutions shall be covered within the scope of protection of the present disclosure. Therefore, the scope of protection of the present disclosure should be based on the scope of protection of the claims.

## Claims

1. An information push method for a dormant card, comprising:
acquiring, in response to detecting a startup flag of a terminal with the dormant card, a startup time of the dormant card and a shutdown time which is closest to the startup time;
calculating a difference between the startup time and the shutdown time as a dormant duration; and
pushing corresponding target discount information to the terminal with the dormant card when the dormant duration reaches a preset time threshold.

2. The information push method for a dormant card according to claim 1, wherein before the acquiring, in the case of detecting a startup flag of a terminal with the dormant card, a startup time of the dormant card and a shutdown time which is closest to the startup time, the method comprises:
acquiring a service type of the dormant card when the dormant card is in a 2G or 3G standard;
in response to the service type being a call service, sending, in the case of detecting a shutdown instruction sent by the terminal with the dormant card, a purge user operation instruction to a home location register through a mobile switching center or a visitor location register, and acquiring the time when the home location register receives the purge user operation instruction as the shutdown time of the dormant card; and
generating, in response to detecting that the terminal with the dormant card is restarted and registers with the mobile network, the startup flag through the mobile switching center or the visitor location register, and acquiring the current time as the startup time of the dormant card.

3. The information push method for a dormant card according to claim 2, wherein before the acquiring, in the case of detecting a startup flag of a terminal with the dormant card, a startup time of the dormant card and a shutdown time which is closest to the startup time, the method comprises:
in response to the service type being a data service, sending, in response to detecting a shutdown instruction sent by the terminal with the dormant card, the purge user operation instruction to the home location register through a wireless packet service support node, and acquiring the time when the home location register receives the purge user operation instruction as the shutdown time of the dormant card; and
generating, in response to detecting that the terminal with the dormant card is restarted and registers with the GPRS network, the startup flag through the wireless packet service support node, and acquiring the current time as the startup time of the dormant card.

4. The information push method for a dormant card according to claim 1, wherein before the acquiring, in the case of detecting a startup flag of a terminal with the dormant card, a startup time of the dormant card and a shutdown time which is closest to the startup time, the method comprises:
in response to the standard of the dormant card being 4G, sending, in the case of detecting a shutdown instruction sent by the terminal with the dormant card, a 4G user location information purge request to a home subscriber server through a mobility management entity, and acquiring the time when the home subscriber server receives the request as the shutdown time of the dormant card; and
generating, in response to detecting that the terminal with the dormant card is restarted and registers with the 4G network, the startup flag through the mobility management entity and acquiring the current time as the startup time of the dormant card.

5. The information push method for a dormant card according to claim 1, wherein before the acquiring, in the case of detecting a startup flag of a terminal with the dormant card, a startup time of the dormant card and a shutdown time which is closest to the startup time, the method comprises:
in response to the standard of the dormant card being 5G, sending, in response to detecting a shutdown instruction sent by the terminal with the dormant card, a flag purge instruction to a unified data management platform through an authentication management platform, and acquiring the time when the unified data management platform receives the flag purge instruction as the shutdown time of the dormant card; and
generating, in response to detecting that the terminal with the dormant card is restarted and registers with the 5G network, the startup flag through the authentication management platform and acquiring the current time as the startup time of the dormant card.

6. The information push method for a dormant card according to claim 1, wherein the pushing corresponding target discount information to the terminal with the dormant card when the dormant duration reaches a preset time threshold comprises:
sending, in a case of the dormant duration reaching the preset time threshold, the dormant duration to a content management system for the content management system to find discount information corresponding to the dormant duration; and
receiving the discount information sent by the content management system as the target discount information, and pushing the target discount information to the terminal with the dormant card.

7. The information push method for a dormant card according to claim 6, wherein before the sending, in the case of the dormant duration reaching the preset time threshold, the dormant duration to a content management system, the method further comprises:
acquiring an Internet protocol address of the content management system and establishing a connection with the content management system based on the Internet protocol address, wherein the connection is a connection based on a transmission control protocol (TCP).

8. The information push method for a dormant card according to any one of claims 1 to 5, wherein before the pushing corresponding target discount information to the terminal with the dormant card when the dormant duration reaches a preset time threshold, the method comprises:
determining, in a case of the dormant duration reaching a first time threshold and being less than a second time threshold, first discount information corresponding to the first time threshold as the target discount information; and
determining, in a case of the dormant duration reaching the second time threshold and being less than a third time threshold, second discount information corresponding to the second time threshold as the target discount information, wherein the discount level of the second discount information is greater than that of the first discount information.

9. An information push device for a dormant card, comprising a processor, a memory, a computer program stored on the memory and executable by the processor, and a data bus configured to implement a connection communication between the processor and the memory, wherein the computer program is configured to, when executed by the processor, implement the information push method for a dormant card as claimed in any one of claims 1 to 8.

10. A storage medium, used for computer-readable storage, wherein the storage medium stores one or more programs, and the one or more programs are executable by one or more processors so as to implement the information push method for a dormant card as claimed in any one of claims 1 to 8.
